# EUROPÄISCHE PATENTANMELDUNG

(11) **EP 4 008 909 A1**
(43) Veröffentlichungstag der Anmeldung: **08.06.2022**
(21) Anmeldenummer: 20210999.7
(22) Anmeldetag: 01.12.2020
(51) Int. Cl.: F04D 25/06, F04D 29/02, F04D 29/28, F04D 29/42, B33Y 80/00

(54) **STRÖMUNGSMASCHINE**

(71) Anmelder: Micronel AG, 8317 Tagelswangen (CH)
(72) Erfinder: MEIER, Peter, 8320 Fehraltorf (CH); SCHERRER, Ernst, 8406 Winterthur, Dättnau (CH)
(74) Vertreter: Rutz, Andrea

(57) **Zusammenfassung**

Es wird eine Strömungsmaschine angegeben, die ein Gehäuse (1) mit zumindest einem Strömungskanal (12, 13, 14), ein im Gehäuse (1) angeordnetes Laufrad (2) sowie einen Antriebsmotor (3) aufweist. Der Antriebsmotor dient zum Antreiben des Laufrads (2), um ein Fluid, durch den zumindest einen Strömungskanal (12, 13, 14) hindurch in das Gehäuse (1) hinein anzusaugen und/oder durch den zumindest einen Strömungskanal (12, 13, 14) hindurch aus dem Gehäuse (1) hinaus zu befördern. Das Gehäuse (1) ist mittels additiver Fertigung hergestellt. Des Weiteren wird eine Strömungsmaschine angegeben, bei der das Laufrad (2) im Spritzgussverfahren hergestellt und direkt an den Rotor (32) eines als Aussenläufer-Motor ausgebildeten Antriebsmotors (3) angespritzt ist.

## Beschreibung

### TECHNISCHES GEBIET

Die vorliegende Erfindung betrifft eine Strömungsmaschine zum Ansaugen und Befördern eines Fluids, wie insbesondere eines Gases. Die Strömungsmaschine kann zum Beispiel zur Erzeugung eines Fluidstroms, zur Fluidabsaugung und/oder zur Erzeugung eines Über- oder Unterdrucks dienen.

### STAND DER TECHNIK

Strömungsmaschinen sind seit langem bekannt und werden in unterschiedlichsten Anwendungen eingesetzt. Die im Rahmen dieses Schutzrechts betreffenden Strömungsmaschinen weisen ein üblicherweise elektrisch angetriebenes Laufrad auf, welches in einem Gehäuse rotiert. Dadurch wird ein Fluid angesaugt, verdichtet und befördert. Je nach Art der Strömungsmaschine kann es sich beim Fluid zum Beispiel um ein Gas, wie insbesondere Luft, oder um eine Flüssigkeit handeln. Falls das Fluid ein Gas ist, wird die Strömungsmaschine üblicherweise als Ventilator oder Verdichter bezeichnet. Während Ventilatoren zwischen Ansaug- und Druckseite ein Druckverhältnis zwischen 1 und 1.3 erzielen, erreichen die als Verdichter benannten Strömungsmaschinen ein Druckverhältnis von grösser als 1.3. Im allgemeinen Sprachgebrauch werden Ventilatoren und Verdichter oft auch als Lüfter oder Gebläse bezeichnet.

Strömungsmaschinen in Form von Ventilatoren und Verdichtern werden insbesondere zur Beatmung von Patienten eingesetzt, wie zum Beispiel bei der CPAP(Continuous Positive Airway Pressure)-Beatmung. Bei der CPAP-Beatmung, welche zum Beispiel in der Intensiv- und Notfallmedizin, aber auch als Therapie bei Schlafapnoe angewandt wird, wird die Atmung des Patienten mit einem konstanten Luftüberdruck unterstützt.

Eine Strömungsmaschine zur Verwendung in einem CPAP-Gerät ist beispielsweise in der WO 2006/045602 A1 offenbart. Die einfach austauschbare Strömungsmaschine weist ein Lüfterrad zur Erzeugung des Überdrucks auf, welches an einen Elektromotor gekoppelt und in einem mehrteiligen Gehäuse aufgenommen ist.

Die DE 83 31 997.2 U1 offenbart einen Gleichstromkleinstventilator mit einem Aussenläufermotor, auf dessen Aussenmantel ein Laufrad aufgeklebt oder aufgeschrumpft ist.

Die EP 2 072 832 A2 offenbart einen Miniaturlüfter zur Kühlung von technischen Bauteilen, wie zum Beispiel Leiterplatten. Der Lüfter weist einen Motor mit einem Aussenrotor auf, an dem ein Lüfterrad befestigt ist.

Bei der Vorrichtung der EP 2 020 736 A2 ist ein Lüfterrad mittels Schrauben am aussenseitigen Rotor eines bürstenlosen Motors befestigt.

Die US 2008/0226472 A1 offenbart einen Lüfter, bei dem das Lüfterrad zusammen mit dem Antriebsmotor in einem kassettenförmigen, mehrteiligen Gehäuse untergebracht sind. Im Inneren des Gehäuses sind Strömungskanäle ausgebildet, die zum Ansaugen und Ausblasen der vom Lüfterrad beförderten Luft dienen.

Die CN 105090118 A1 offenbart eine Wasserpumpe mit einem kassettenartigen Gehäuse, in dessen Inneren ein Impeller zur Beförderung des Wassers angeordnet ist. Das Gehäuse weist Strömungskanäle zum Zu- und Abführen des Wassers auf. Indem ein Kanalteil beweglich ausgebildet ist, lässt sich das Gehäuse mit unterschiedlichen Impellern kombinieren.

### DARSTELLUNG DER ERFINDUNG

Es ist also eine Aufgabe der vorliegenden Erfindung, eine effiziente Strömungsmaschine anzugeben, die einfach und kostengünstig herstellbar ist. Zur Lösung dieser Aufgabe wird eine Strömungsmaschine vorgeschlagen, wie sie in Anspruch 1 angegeben ist. Eine weitere Strömungsmaschine, welche diese Aufgabe löst, ist in Anspruch 15 angegeben. Vorteilhafte Ausführungsformen sind in den abhängigen Ansprüchen angegeben.

Die vorliegende Erfindung stellt also eine Strömungsmaschine, insbesondere ein Ventilator oder Verdichter, zur Verfügung, aufweisend
ein Gehäuse mit zumindest einem Strömungskanal;
ein im Gehäuse angeordnetes Laufrad; sowie
einen Antriebsmotor zum Antreiben des Laufrads in einer Drehbewegung um eine Rotationsachse, um ein Fluid, insbesondere ein Gas, durch den zumindest einen Strömungskanal hindurch in das Gehäuse hinein anzusaugen und/oder durch den zumindest einen Strömungskanal hindurch aus dem Gehäuse hinaus zu befördern.
   Das Gehäuse ist erfindungsgemäss mittels additiver Fertigung hergestellt.

Die additive Fertigung ermöglicht es nicht nur, das Gehäuse auf einfache Art und Weise herzustellen, sondern erlaubt auch die Ausbildung von komplexen dreidimensionalen Strukturen am Gehäuse. So können der eine oder die mehreren Strömungskanäle problemlos gerundete Flächen und/oder Kurven aufweisen und auch vollständig im Gehäuseinneren verlaufen, das heisst Abschnitte aufweisen, welche im Querschnitt vollständig vom Material des Gehäuses umschlossen sind. Das Gehäuse kann aufgrund der Herstellung mittels additiver Fertigung auch Hinterschnitte und/oder Hohlräume aufweisen, was bei konventionellen Herstellungsmethoden einstückig nicht oder nur mit erheblichem Zusatzaufwand möglich wäre. Des Weiteren ermöglicht die additive Fertigung nicht nur die parallele Herstellung einer Vielzahl von Gehäusen gleichzeitig, sondern erlaubt auch eine sehr flexible Anpassung der Gehäuseform an spezielle Erfordernisse und/oder an Kundenwünsche. Aufgrund der additiven Fertigung ist auch die Herstellung von besonders klein dimensionierten, aber trotzdem dreidimensional komplizierten Strukturen möglich, so dass die Herstellung von besonders kleinen, aber trotzdem sehr effizienten Strömungsmaschinen möglich ist.

Die additive Fertigung, auch 3D-Druck genannt, bezeichnet Fertigungsverfahren, bei denen Material schichtweise und vorteilhaft computergesteuert aufgetragen wird. Als Werkstoffe kommen zum Beispiel Kunststoffe, Kunstharze, Keramiken und Metalle in Frage, wobei die Werkstoffe bei der Fertigung in flüssiger oder fester Form (zum Beispiel als Pulver) aufgetragen werden können. Bei der Fertigung finden vorteilhaft beim Auftragen oder unmittelbar danach physikalische und/oder chemische Härtungs- oder Schmelzprozesse statt.

Aufgrund der additiven Fertigung kann die Herstellung sehr einfach an unterschiedliche Gehäuseformen angepasst werden. Insbesondere müssen hierzu keine speziellen Werkzeuge, wie zum Beispiel Gussformen, angefertigt werden. Eine Anpassung lohnt sich deshalb auch für kleine Stückzahlen, so dass die Strömungsmaschine auf besonders einfache Art und Weise zum Beispiel bzgl. ihrer Leistung re-dimensioniert werden kann oder an spezielle Erfordernisse und/oder an Kundenwünsche anpassbar ist.

Indem das Gehäuse eine komplexe dreidimensionale Struktur mit zum Beispiel Hinterschnitten, Hohlräumen und/oder komplett im Inneren verlaufenden Strömungskanälen mit Biegungen, Kurven etc. aufweisen kann, ist eine besonders gute Optimierung der Strömungsmaschine bzgl. hydro- oder aerodynamischen Erfordernissen und/oder bzgl. schalltechnischen Vorgaben möglich. Auch die Kammer, in welcher das Laufrad angeordnet ist, kann bzgl. der Form ihrer Innenflächen optimal an hydro- bzw. aerodynamische Erfordernisse angepasst werden. Die Möglichkeit von Hohlräumen kann benutzt werden, um zum Beispiel bei der Herstellung den Materialverbrauch oder das Gewicht der Strömungsmaschine zu reduzieren. Es können aber zum Beispiel auch gezielt Hohlräume geschaffen werden, um das Schallverhalten des Gehäuses bzw. der Strömungsmaschine positiv zu beeinflussen. Der oder die erwähnten Hohlräume können dabei vollständig im Gehäuseinneren angeordnet sein, das heisst vollständig vom Material des Gehäuses umschlossen sein. Gemäss einer Weiterbildung der Erfindung können der oder die Hohlräume teilweise oder ganz mit einem Pulver ausgefüllt sein. Es hat sich herausgestellt, dass das Pulver in den Hohlräumen zu einer deutlichen Reduktion von Vibrationen und Schallemissionen führt. Beim Pulver kann es sich insbesondere um das Additiv-Pulver handeln, welches zur additiven Fertigung des Gehäuses verwendet wird, das aber im Bereich der Hohlräume nicht gehärtet bzw. geschmolzen wird, sondern in Pulverform in den Hohlräumen verbleibt. Die Herstellung einer Strömungsmaschine mit geringen Schallemissionen wird dadurch besonders einfach.

Bei der Strömungsmaschine handelt es sich bevorzugt um einen Ventilator oder Verdichter zur Förderung eines Gases, wie insbesondere Luft. Insbesondere kann es sich um eine radiale Strömungsmaschine handeln, bei der das Fluid im unmittelbaren Bereich des Laufrades axial bzw. parallel zur Rotationsachse angesaugt wird. Der Fluidstrom wird bei der radialen Strömungsmaschine durch die Rotation des Laufrades um 90° umgelenkt und in radialer Richtung vom Laufrad aus weg befördert, um dann durch einen Gasauslass hindurch nach aussen hin ausgeblasen zu werden. Mit anderen Worten kann das Laufrad insbesondere dazu ausgebildet sein, den Fluidstrom bzgl. der Rotationsachse von einer axialen Richtung in eine radiale Richtung umzulenken. Radiale Strömungsmaschinen ermöglichen bei vorgegebener Luftmenge üblicherweise die Erzeugung eines verhältnismässig grossen Druckes. Zudem kann es sich beim Strömungskanal oder bei zumindest einem der Strömungskanäle insbesondere um einen Einströmungskanal handeln, der sich (zumindest im Abschnitt unmittelbar stromaufwärts zum Laufrad) derart zum Laufrad hin erstreckt, dass das durch den Einströmungskanal angesaugte Fluid bzgl. der Rotationsachse in axialer Richtung und zentral auf das Laufrad auftrifft. Grundsätzlich wäre es aber auch möglich, dass die Strömungsmaschine eine axiale Strömungsmaschine ist, bei welcher der Fluidstrom in axialer Richtung bzgl. der Rotationsachse in das Gehäuse hinein und zum Laufrad hin sowie in axialer Richtung vom Laufrad weg und aus dem Gehäuse hinaus strömt.

Im Vergleich zu herkömmlichen Herstellungsarten weisen Bauteile, die mittels additiver Fertigung hergestellt sind, üblicherweise eine etwas erhöhte Oberflächenrauheit auf. Es wurde überraschenderweise festgestellt, dass dies je nachdem beim Gehäuse der erfindungsgemässen Strömungsmaschine gewisse Vorteile mit sich bringen kann: Aufgrund der erhöhten Oberflächenrauheit der Gehäuseinnenflächen, wie zum Beispiel im Bereich der Laufradkammer und der Strömungskanäle, entstehen am Rand des Fluidstroms kleine Verwirbelungen. Innerhalb dieser Verwirbelungen kann das Fluid aber weiterhin weitgehend laminar strömen. Insbesondere an schalltechnisch heiklen Stellen, wie zum Beispiel im Bereich der Einlass- und Auslassmündungen, führen die Verwirbelungen aber zu einer deutlichen Reduktion von Schwingungen am Gehäuse. Die erhöhte Oberflächenrauheit kann deshalb unerwarteterweise insgesamt zu einer Reduktion der Schallemissionen im Betrieb der Strömungsmaschine führen. Die erhöhte Oberflächenrauheit führt ausserdem dazu, dass der Schall im Inneren des Gehäuses vermehrt diffus, das heisst in verschiedene Richtungen, reflektiert und aufgrund der grösseren Oberfläche eher absorbiert wird.

Aufgrund der additiven Fertigung hat das Gehäuse üblicherweise somit im Vergleich zu herkömmlichen Herstellungsarten eine etwas erhöhte Oberflächenrauheit. Zudem sind bei genauerer Betrachtung, allenfalls bei Vergrösserung oder gar unter dem Mikroskop, die bei der Fertigung aufgetragenen Schichten auch am fertig herstellten Gehäuse meist noch sichtbar. Des Weiteren kann ein Fachmann oft auch anhand der Komplexität der dreidimensionalen Form des Gehäuses die Herstellung mittels additiver Fertigung erkennen. An der fertig hergestellten Strömungsmaschine ist die additive Fertigung des Gehäuses für einen Fachmann somit ohne Weiteres erkennbar.

Der oder die Strömungskanäle verlaufen vorteilhaft zu einem Grossteil vollständig im Inneren des Gehäuses. Auch die Laufradkammer befindet sich bevorzugt zum einem Grossteil im Inneren des Gehäuses, das heisst ihre Innenflächen werden zu 50% oder mehr, bevorzugter zu 60% oder mehr, noch bevorzugter zu 70% oder mehr vom Gehäuse gebildet. Der oder die Strömungskanäle können insbesondere am Gehäuse angeformt sein. Vorzugsweise sind zumindest ein Einströmungskanal und ein Ausströmungskanal vorhanden. Der Einströmungskanal ist stromaufwärts und der Ausströmungskanal stromabwärts zum Laufrad angeordnet.

Das Laufrad dient zur Beförderung des Fluids in der Strömungsmaschine. Wenn es sich beim beförderten Fluid um ein Gas, insbesondere um Luft, handelt, kann das Laufrad auch als Lüfterrad bezeichnet werden. Zur Beförderung des Fluids weist das Laufrad üblicherweise Laufradschaufeln auf, welche im Betrieb der Strömungsmaschine, das heisst bei Rotation des Laufrads um seine Rotationsachse, derart auf das Fluid in der Laufradkammer einwirken, dass dieses befördert wird. Im Bereich stromabwärts des Laufrades entsteht dadurch ein Überdruck, so dass das Fluid aus der Strömungsmaschine ausgestossen wird. Im Bereich stromaufwärts der Laufradkammer entsteht hingegen ein Unterdruck, wodurch weiteres Fluid angesogen wird. Das Laufrad ist hierzu an einen Rotor der Antriebsmaschine gekoppelt. Bevorzugt ist das Laufrad via eine Welle oder, noch bevorzugter, direkt am Rotor befestigt.

Das Gehäuse ist bevorzugt als Ganzes einstückig hergestellt. Mit Ausnahme der Ein- und Auslässe der Strömungskanäle sowie einer allfälligen Öffnung zum Einsetzen des Laufrades und/oder des Antriebsmotors weist das Gehäuse vorzugsweise keine weiteren Öffnungen auf. Falls eine Öffnung zum Einsetzen des Laufrades und/oder des Antriebsmotors vorhanden ist, ist diese vorteilhaft mit einer Deckplatte verschliessbar. Die Deckplatte hat vorteilhaft als Ganzes eine einfache, plattenförmige Ausgestaltung. Grundsätzlich wäre aber eine Anordnung des Antriebsmotors auch ausserhalb des Gehäuses denkbar. Aufgrund der einstückigen Ausgestaltung des Gehäuses ist die Strömungsmaschine vorteilhaft mit besonders wenigen Bauteilen herstellbar. Bevorzugt weist die Strömungsmaschine lediglich das einstückig hergestellte Gehäuse, das Laufrad und den Antriebsmotor sowie allenfalls die Deckplatte auf. Optional kann die Strömungsmaschine noch eine Elektronikeinheit zur Ansteuerung des Antriebsmotors und/oder Energiespeicher, wie z.B. eine oder mehrere Batterien, aufweisen.

Die Strömungsmaschine kann insbesondere zur künstlichen Beatmung bzw. zur Atmungsunterstützung ausgebildet sein. Insbesondere kann die Strömungsmaschine zur Verwendung in einem CPAP-Gerät ausgebildet sein. Eine mit der additiven Fertigung mögliche besonders kleine Dimensionierung der Strömungsmaschine kann es ermöglichen, dass sie nahe von Nase und/oder getragen bzw. angeordnet wird. Der Atemschlauch wird dadurch kurz und bewirkt einen tiefen Widerstand, so dass sich der Leistungsbedarf der Strömungsmaschine reduziert.

Dank der möglichen kleinen und leichten Bauweise kann die Strömungsmaschine gemäss einer Weiterbildung der Erfindung insbesondere auch in einer Ganz-Gesichts-Maske (engl. Full-Face-Mask) zum Einsatz kommen. Aufgrund der additiven Fertigung ist das Gehäuse der Strömungsmaschine individuell an den jeweiligen Patienten anpassbar und kann dadurch besonders ergonomisch ausgestaltet werden. Auch die technischen Werte der Strömungsmaschine sind aufgrund der additiven Fertigung des Gehäuses besonders einfach anpassbar.

Aufgrund ihrer besonders einfachen Herstellungsart kann die Strömungsmaschine insbesondere als Wegwerfkomponente konzipiert sein. Da dadurch die Anforderungen an die Lebensdauer der Strömungsmaschine reduziert werden, kann deren Herstellung erheblich vereinfacht und kostengünstiger gestaltet werden. Wenn die Strömungsmaschine zum Beispiel in einem CPAP-Gerät eingesetzt wird, kann dieses dazu ausgebildet sein, dem Benutzer z.B. nach einer gewissen Anzahl Betriebsstunden den notwendigen Ersatz der Strömungsmaschine anzuzeigen, ähnlich wie es dies z.B. bei Druckern in Bezug auf die Druckerpatronen seit längerem bekannt ist. Die Strömungsmaschine selbst kann dazu ausgebildet sein, dem Benutzer und/oder dem Beatmungsgerät z.B. den notwendigen Ersatz anzuzeigen, beispielsweise auf der Basis einer Betriebsstundenerfassung.

Beim Strömungskanal oder bei zumindest einem der Strömungskanäle kann es sich insbesondere um einen Ausströmungskanal handeln, der sich bzgl. der Rotationsachse in tangentialer und/oder radialer Richtung vom Laufrad aus weg erstreckt und zum Befördern des Fluids aus dem Gehäuse hinaus dient. Vorteilhaft wird der Fluidstrom im Übergangsbereich zwischen Laufrad und Ausströmungskanal nicht umgelenkt. Bevorzugt erstreckt sich der Ausströmungskanal zumindest in einem ersten Abschnitt unmittelbar nach dem Laufrad, noch bevorzugter der gesamte Ausströmungskanal bis zur Auslassmündung, parallel zu einer senkrecht zur Rotationsachse stehenden Ebene. Der Fluidstrom wird dadurch weniger umgelenkt und erfährt entsprechend weniger Widerstand.

In bestimmten Ausführungsformen kann es vorteilhaft sein, wenn der Ausströmungskanal bzgl. der Rotationsachse in tangentialer und/oder radialer Richtung vom Gehäuse aus nach aussen mündet. Bevorzugt erstreckt sich der Ausströmungskanal zumindest in einem Abschnitt unmittelbar vor der Auslassmündung parallel zu einer senkrecht zur Rotationsachse stehenden Ebene. Auf diese Weise wird der Fluidstrom im Bereich der Auslassmündung weniger umgelenkt, was weniger Widerstand und weniger Fluidverwirbelungen und damit weniger Schallemissionen mit sich bringt.

In anderen Ausführungsformen kann es jedoch vorteilhaft sein, wenn der Ausströmungskanal bzgl. der Rotationsachse in axialer Richtung vom Gehäuse aus nach aussen mündet. Vorteilhaft in Bezug auf Schallemissionen ist die Auslassöffnung jedoch radial beabstandet von der Rotationsachse angeordnet. Die Auslassöffnung wird dabei bevorzugt von einem Auslassstutzen gebildet.

Der Einströmungskanal mündet bevorzugt bzgl. der Rotationsachse in tangentialer und/oder radialer Richtung vom Gehäuse aus nach aussen. Bevorzugt erstreckt sich der Einströmungskanal zumindest in einem ersten Abschnitt unmittelbar nach der Einlassmündung, noch bevorzugter der gesamte Einströmungskanal bis zum Laufrad, parallel zu einer senkrecht zur Rotationsachse stehenden Ebene. Der Fluidstrom wird dadurch weniger umgelenkt und erfährt entsprechend weniger Widerstand.

Bevorzugt hat das Gehäuse, noch bevorzugter die Strömungsmaschine als Ganzes, eine quaderförmige Gestalt. Das Gehäuse, bevorzugt die Strömungsmaschine als Ganzes, weist bevorzugt eine kompakte und vorteilhaft kassettenartige Form auf. Vorteilhaft sind die Abmessungen des Gehäuses in Richtung entlang der Rotationsachse um mindestens die Hälfte kleiner als jeweils in zwei senkrecht zur Rotationsachse stehende Raumrichtungen.

Beim Antriebsmotor handelt es sich bevorzugt um einen Elektromotor mit einem bzgl. des Gehäuses ortsfesten Stators und einem im Betrieb rotierenden Rotor. Der Rotor rotiert dabei bevorzugt um die Rotationsachse des Laufrads. Der Elektromotor kann insbesondere ein bürstenloser Gleichstrommotor sein.

Das Laufrad ist vorteilhaft als Ganzes einstückig hergestellt. Bevorzugt ist es im Spritzgussverfahren, vorteilhaft aus einem Kunststoffmaterial, hergestellt.

Bei einer insbesondere bevorzugten Ausführungsform handelt es sich beim Antriebsmotor um einen Aussenläufer-Motor mit einem Stator und mit einem den Stator umgebenden Rotor. Das Laufrad ist dabei bevorzugt im Spritzgussverfahren hergestellt und fest am Rotor, vorteilhaft an der radialen Aussenfläche des Rotors, angebracht. Auf diese Weise kann das Drehmoment optimal vom Rotor auf das Laufrad übertragen werden, ohne dass eine Welle oder andere zusätzliche Bauteile notwendig sind. Die Massenträgheit der Rotor/Laufrad-Einheit kann dadurch minimiert werden, wodurch eine besonders grosse Dynamik der Strömungsmaschine erreicht werden kann.

Insbesondere bevorzugt ist eine Ausführungsform, bei der das Laufrad direkt an den Rotor des Aussenläufer-Motors angespritzt ist. Das Laufrad ist dadurch besonders fest mit dem Rotor verbunden. Ausserdem vereinfacht sich die Herstellung, da das Laufrad bereits bei seiner Herstellung am Motor angebracht wird und dementsprechend keine weiteren Schritte zur Kopplung des Laufrads an den Motor notwendig sind. Die Auswuchtung kann dann für den Antriebsmotor und das Laufrad gemeinsam erfolgen. Das Laufrad kann direkt an die radiale Aussenfläche des Rotors angespritzt sein. Insbesondere kann das Laufrad direkt an den Glockenanker des Aussenläufer-Motors angespritzt sein.

Das Gehäuse weist bevorzugt einen Innenraum zur Aufnahme des Antriebsmotors und des Laufrads auf. Der Antriebsmotor ist dann vorteilhaft an einer Deckplatte angebracht, welche zum Verschliessen des Innenraums nach aussen hin dient. Beim Einsetzen des Antriebsmotors mit dem daran angebrachten Laufrad in den Innenraum wird dann also vorteilhaft gleichzeitig der Innenraum mit der Deckplatte verschlossen. Die Herstellung der Strömungsmaschine wird dadurch weiter vereinfacht. Wenn der Innenraum bestimmungsgemäss durch die Deckplatte verschlossen ist, weist das Gehäuse mit Ausnahme einer oder mehrerer Einlassmündungen sowie einer oder mehrerer Auslassmündungen für das Fluid keine weiteren Öffnungen auf.

Die Strömungsmaschine kann ausserdem eine zur Steuerung des Antriebmotors dienende Elektronikeinheit aufweisen, welche insbesondere im Innenraum des Gehäuses angeordnet und vorteilhaft an der Deckplatte angebracht ist.

Das Laufrad weist bevorzugt rückwärtsgekrümmte Schaufeln auf. Dadurch können besonders hohe Drücke sowie ein hoher Wirkungsgrad erreicht werden.

Die Strömungsmaschine kann ausserdem einen Partikelfilter, insbesondere einen HEPA-Filter, aufweisen, welcher im Bereich des Strömungskanals oder von zumindest einem der Strömungskanäle angeordnet ist. Besonders bevorzugt ist der Partikelfilter im Bereich der Einlassmündung des Einströmkanals angeordnet, so dass das Laufrad bzw. der mit Atemluft zu versorgende Patient vor Partikeln geschützt ist.

Die vorliegende Erfindung bezieht sich ausserdem auf eine Strömungsmaschine, insbesondere Ventilator oder Verdichter, welche bevorzugt wie oben ausgeführt ausgebildet ist und aufweist:
ein Laufrad; sowie
einen als Aussenläufer-Motor ausgebildeten Antriebsmotor mit einem Stator und mit einem den Stator umgebenden Rotor zum Antreiben des Laufrads in einer Drehbewegung um eine Rotationsachse, um ein Fluid, insbesondere ein Gas, anzusaugen und zu befördern.
   Das Laufrad ist im Spritzgussverfahren hergestellt und direkt an den Rotor, insbesondere an die radiale Aussenseite des Rotors, angespritzt.

Die Strömungsmaschine kann, muss aber nicht, ein wie oben ausgeführt mittels additiver Fertigung hergestelltes Gehäuse mit Strömungskanälen aufweisen. Die Strömungsmaschine mit dem an den Rotor des Aussenläufer-Motors angespritzten Laufrad kann genauso gut auch ein herkömmlich hergestelltes Gehäuse aufweisen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht von schräg hinten einer ersten Ausführungsform einer erfindungsgemässen Strömungsmaschine;
- Fig. 2: eine Ansicht der Strömungsmaschine der Fig. 1 von der Seite;
- Fig. 3: eine Ansicht der Rückseite der Strömungsmaschine der Fig. 1;
- Fig. 4: eine Ansicht der Vorderseite der Strömungsmaschine der Fig. 1;
- Fig. 5: eine zentrale Schnittansicht entlang der in der Fig. 2 angegebenen Ebene V-V der Strömungsmaschine der Fig. 1;
- Fig. 6: eine zentrale Schnittansicht entlang der in der Fig. 3 angegebenen Ebene VI-VI der Strömungsmaschine der Fig. 1;
- Fig. 7: eine Schnittansicht entlang der in der Fig. 2 angegebenen Ebene VII-VII der Strömungsmaschine der Fig. 1;
- Fig. 8: eine Schnittansicht entlang der in der Fig. 3 angegebenen Ebene VIII-VIII der Strömungsmaschine der Fig. 1;
- Fig. 9: eine perspektivische Ansicht des am Antriebsmotor angebrachten Laufrads der Strömungsmaschine der Fig. 1, inkl. Deckplatte;
- Fig. 10: eine Ansicht des am Antriebsmotor angebrachten Laufrads der Strömungsmaschine der Fig. 1, inkl. Deckplatte, von der Seite;
- Fig. 11: eine Ansicht des am Antriebsmotor angebrachten Laufrads der Strömungsmaschine der Fig. 1, inkl. Deckplatte, von vorne;
- Fig. 12: eine perspektivische Ansicht von schräg hinten einer zweiten Ausführungsform einer erfindungsgemässen Strömungsmaschine;
- Fig. 13: eine Ansicht der Strömungsmaschine der Fig. 12 von der Seite;
- Fig. 14: eine zentrale Schnittansicht entlang der in der Fig. 13 angegebenen Ebene XIV-XIV der Strömungsmaschine der Fig. 12;
- Fig. 15: eine zentrale Schnittansicht entlang der in der Fig. 14 angegebenen Ebene XV-XV der Strömungsmaschine der Fig. 12;
- Fig. 16: eine perspektivische Ansicht von schräg hinten einer dritten Ausführungsform einer erfindungsgemässen Strömungsmaschine;
- Fig. 17: eine Ansicht der Strömungsmaschine der Fig. 16 von der Seite;
- Fig. 18: eine zentrale Schnittansicht entlang der in der Fig. 17 angegebenen Ebene XVIII-XVIII der Strömungsmaschine der Fig. 16;
- Fig. 19: eine zentrale Schnittansicht entlang der in der Fig. 18 angegebenen Ebene XIX-XIX der Strömungsmaschine der Fig. 16;
- Fig. 20: eine perspektivische Ansicht des am Antriebsmotor angebrachten Laufrads der Strömungsmaschine der Fig. 16, inkl. Deckplatte;
- Fig. 21: eine Ansicht des am Antriebsmotor angebrachten Laufrads der Strömungsmaschine der Fig. 16, inkl. Deckplatte, von der Seite;
- Fig. 22: eine Ansicht des am Antriebsmotor angebrachten Laufrads der Strömungsmaschine der Fig. 16, inkl. Deckplatte, von vorne;
- Fig. 23: eine perspektivische Ansicht von schräg hinten einer vierten Ausführungsform einer erfindungsgemässen Strömungsmaschine;
- Fig. 24: eine zentrale Schnittansicht der Strömungsmaschine der Fig. 23;
- Fig. 25: eine zentrale Schnittansicht entlang der in der Fig. 24 angegebenen Ebene XXV-XXV der Strömungsmaschine der Fig. 23;
- Fig. 26: eine perspektivische Ansicht von schräg hinten einer fünften Ausführungsform einer erfindungsgemässen Strömungsmaschine;
- Fig. 27: eine Ansicht der Strömungsmaschine der Fig. 26 von der Seite;
- Fig. 28: eine zentrale Schnittansicht entlang der in der Fig. 27 angegebenen Ebene XXIV-XXIV der Strömungsmaschine der Fig. 26; sowie
- Fig. 29: eine zentrale Schnittansicht entlang der in der Fig. 28 angegebenen Ebene XXIX-XXIX der Strömungsmaschine der Fig. 26.

### BESCHREIBUNG BEVORZUGTER AUSFÜHRUNGSFORMEN

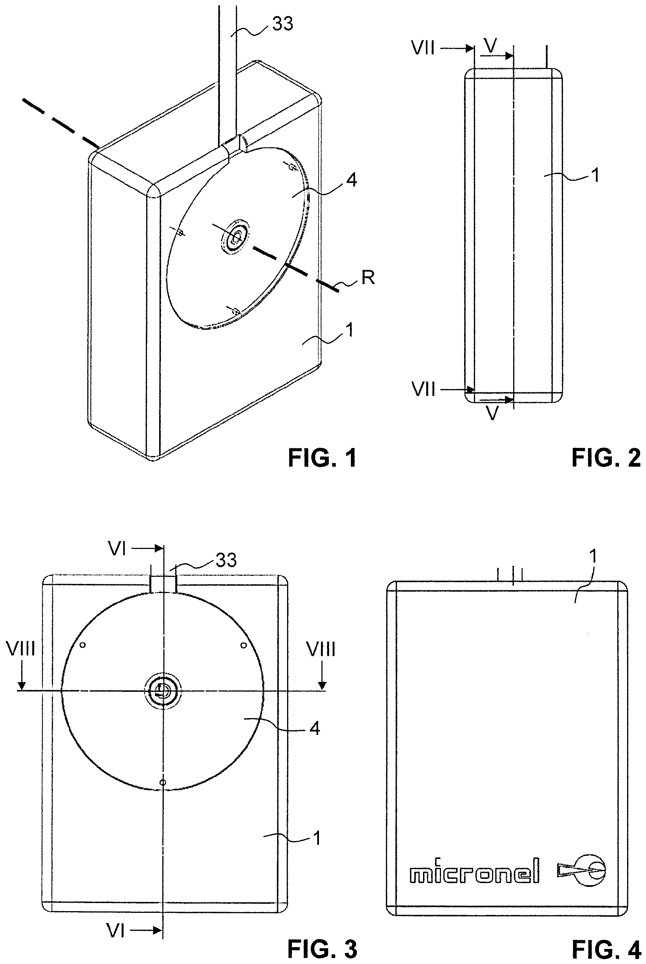

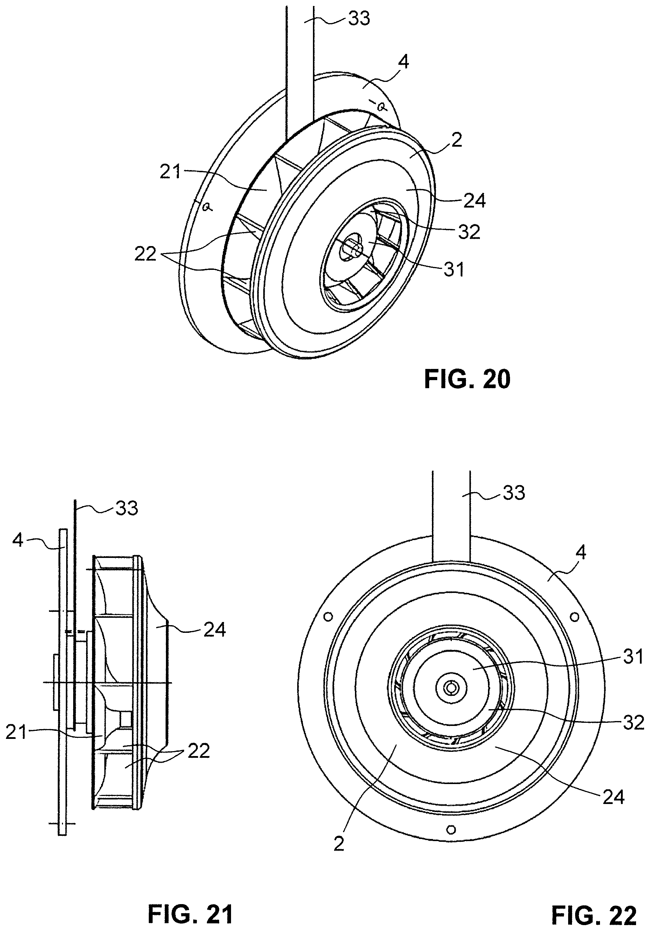

In den Figuren 1 bis 29 sind verschiedene bevorzugte Ausführungsformen von erfindungsgemässen Strömungsmaschinen gezeigt, welche jeweils zum Befördern eines Gases, insbesondere Luft, in einem Beatmungsgerät dienen. Beim Beatmungsgerät handelt es sich bevorzugt um ein CPAP-Gerät. Elemente, die eine gleiche oder zumindest ähnliche Funktion erfüllen, aber zu unterschiedlichen Ausführungsformen gehören, sind jeweils mit denselben Bezugszeichen versehen.

In den Figuren 1 bis 4 sind verschiedene Aussenansichten einer ersten Ausführungsform einer erfindungsgemässen Strömungsmaschine gezeigt. Wie aus diesen Figuren gut ersichtlich ist, weist die Strömungsmaschine insgesamt eine sehr kompakte, quaderförmige Gestalt auf. Die Form der Strömungsmaschine ist derjenigen einer üblichen Zigarettenschachtel ähnlich. Diese kassettenartige Bauweise ermöglicht nicht nur ein einfaches Einsetzen und Entnehmen der Strömungsmaschine in bzw. aus dem Beatmungsgerät, sondern auch eine platzsparende Lagerung einer Vielzahl von derartigen Strömungsmaschinen. Die Strömungsmaschinen sind dadurch insbesondere stapelbar.

Die in den Figuren 1 bis 8 gezeigte erste Ausführungsform einer Strömungsmaschine weist ein quaderförmiges, als Ganzes einstückig ausgebildetes Gehäuse 1 auf. Am Gehäuse 1 sind von aussen her lediglich eine durch eine Deckplatte 4 verschlossene kreisrunde Öffnung sowie eine Einlassmündung 15 und eine Auslassmündung 16 erkennbar. Die Einlassmündung 15 und die Auslassmündung 16 sind nebeneinander an einer schmalen Stirnseite des Gehäuses 1 angeordnet. Die von der Deckplatte 4 verschlossene Öffnung befindet sich an der grossflächigen Rückseite des Gehäuses 1.

Die Aussenabmessungen des Gehäuses betragen bevorzugt 50x20x70 mm oder 50x20x60 mm.

Auf der der Einlassmündung 15 und der Auslassmündung 16 gegenüberliegenden Stirnseite ist ein Steuerungs- und Energieversorgungskabel 33 aus dem Gehäuse 1 herausgeführt. Dieses dient zur Versorgung eines im Gehäuseinnern angeordneten Antriebsmotors 3 mit elektrischer Energie. Ausserdem können über das Steuerungs- und Energieversorgungskabel 33 Signale übertragen werden, um den Antriebsmotor 3 anzusteuern und zu kontrollieren.

Das Gehäuse 1 ist mittels additiver Fertigung hergestellt und kann dementsprechend eine Oberflächenrauheit aufweisen, die im Vergleich zu herkömmlichen Herstellverfahren erhöht ist.

Das Gehäuse 1 weist einen Innenraum 11 auf, welcher zur Rückseite hin von der Deckplatte 4 abgedeckt ist. Im Innenraum 11 ist der Antriebsmotor 3 mit daran angebrachtem Laufrad 2 angeordnet. Der Antriebsmotor 3 und das Laufrad 2 füllen den Innenraum 11 beinahe vollständig aus. Der Innenraum 11 wird von Innenflächen des Gehäuses 1 begrenzt, die an die Aussenform des Laufrads 2 angepasst sind. Radial angrenzend an das Laufrad 2 bildet das Gehäuse 1 einen peripheren Strömungskanal 14, der sich um das Laufrad 2 herum erstreckt.

Beim Antriebsmotor 3 handelt es sich um einen Aussenläufer-Motor mit einem Stator 31 und einem diesen umgebenden Rotor 32. Der Stator 31 ist fest an der Deckplatte 4 angebracht und dadurch ortsfest in Bezug auf das Gehäuse 1. Im Betrieb der Strömungsmaschine rotiert der Rotor 32 um eine Rotationsachse R, die sich senkrecht zu den Aussenflächen der Vorder- und Rückseite des Gehäuses 1 erstreckt. Der Antriebsmotor 3 ist bevorzugt ein bürstenloser Gleichstrommotor.

Das Laufrad 2, welches auch als Lüfterrad bezeichnet werden kann, ist an der radialen Aussenseite des Rotors 32 angebracht. Vorteilhaft ist das Laufrad 2 als Ganzes einstückig und im Spritzgussverfahren zum Beispiel aus einem Kunststoffmaterial hergestellt. Bevorzugt ist das Laufrad 2 dabei direkt an die radiale Aussenseite des Rotors 32, noch bevorzugter direkt an den Glockenanker des Antriebsmotors 3 angespritzt, das heisst das Laufrad 2 wird bereits bei seiner Herstellung am Rotor 32 angebracht.

Vom Innenraum 11 und vom peripheren Strömungskanal 14 aus erstreckt sich ein Ausströmungskanal 13 in radialer und vor allem tangentialer Richtung zur Auslassmündung 16 hin. Vom Innenraum 11 bis zur Auslassmündung 16 erstreckt sich der Ausströmungskanal 13 innerhalb derselben, senkrecht zur Rotationsachse R stehenden Ebene. Im Betrieb der Strömungsmaschine gelangt das vom Laufrad 2 beförderte Fluid vom Innenraum 11 durch den Ausströmungskanal 13 hindurch zur Auslassmündung 16. An der Auslassmündung 16 kann ein Beatmungsschlauch angeschlossen sein, welcher zu einem Patienten führt.

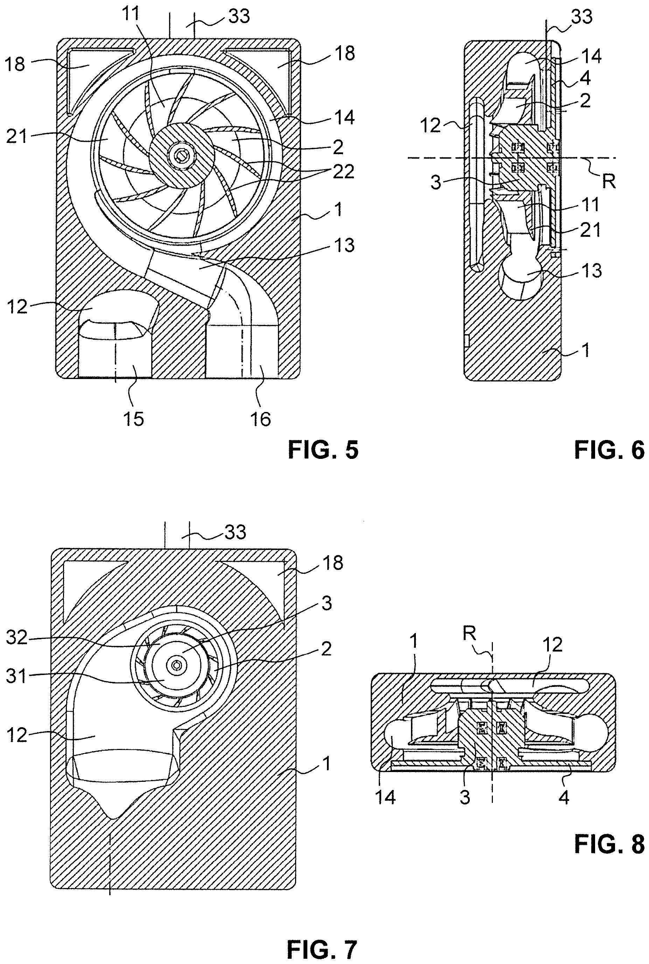

Von der Einlassmündung 15 aus erstreckt sich ein Einströmungskanal 12 derart zum Laufrad 2 hin, dass das durch den Einströmungskanal 12 angesaugte Fluid bzgl. der Rotationsachse R in axialer Richtung und zentral von der Vorderseite her auf das Laufrad 2 auftrifft. Der Einströmungskanal 12 erstreckt sich hierzu von der Einlassmündung 15 her zuerst leicht zur Vorderseite des Gehäuses 1 hin und anschliessend vor dem Ausströmungskanal 13 und dem Innenraum 11 zur Rotationsachse R hin (siehe Figuren 5-7). In Richtung von der Vorder- zur Rückseite des Gehäuses 1 betrachtet (Figuren 6, und 8), verjüngt sich der Einströmungskanal 12 kontinuierlich bis zur Rotationsachse R. In die dazu senkrecht stehenden Richtungen verbreitert er sich jedoch (Figuren 5 und 7). Im Bereich der Rotationsachse R mündet der Einströmungskanal 12 in axialer Richtung in den Innenraum 11.

Im Betrieb der Strömungsmaschine wird das Fluid, bei welchem es sich insbesondere um ein Gas, wie zum Beispiel Luft, handeln kann, vom sich drehenden Lüfterrad 2 durch die Einlassmündung 15 hindurch in den Einströmungskanal 12 hinein angesogen. Das Fluid gelangt dann durch den Einströmungskanal 12 hindurch zur Vorderseite des Laufrads 2. Im Bereich der Rotationsachse R wird das durch den Einströmungskanal 12 einströmende Fluid um ca. 90° umgelenkt, so dass es zentral auf die Vorderseite des Laufrades 2 auftrifft und von diesem erfasst wird. Vom Laufrad 2 wird das axial einströmende Fluid erneut um ca. 90° umgelenkt und in radialer Richtung nach aussen hin befördert. Von dort gelangt es in den peripheren Strömungskanal 14 und via diesen in den Ausströmungskanal 13. Durch den Ausströmungskanal 13 und die Auslassmündung 16 hindurch wird das Fluid aus dem Gehäuse 1 ausgestossen.

Sowohl der Einströmungskanal 12 als auch der Ausströmungskanal 13 erstrecken sich somit jeweils vollständig im Inneren des Gehäuses 1 und bilden gemeinsam mit dem Innenraum 11 eine verhältnismässig komplexe dreidimensionale Struktur. Mittels herkömmlichen Herstellungsverfahren und insbesondere mittels Herstellungsverfahren, die auf Gussformen basieren, wäre eine derart komplexe Struktur des Gehäuses 1 nicht ohne Weiteres in einem Stück realisierbar. Die additive Fertigung macht dies jedoch möglich und ermöglicht dadurch eine noch kompaktere, optimale Bauform des Gehäuses 1.

Die parallele Anordnung der Einlassmündung 15 und der Auslassmündung 16 ermöglichen eine besonders platzsparende Anordnung von Anschlussleitungen. Da der Fluidstrom sowohl im Einströmungskanal 12 als auch im Ausströmungskanal 13 umgelenkt wird, ist das Laufrad 2 weder durch die Einlassmündung 15 noch durch die Auslassmündung 16 hindurch sichtbar. Der vom Laufrad 2 erzeugte Schall kann dadurch nicht auf direktem Weg nach draussen gelangen, sondern wird im Inneren des Gehäuses 1 mehrfach reflektiert und dabei zumindest zum Teil absorbiert, was in einer deutlich wahrnehmbaren Schallreduktion nach aussen hin resultiert.

In den Figuren 5 und 7 ist erkennbar, dass das Gehäuse 1 der vorliegenden Ausführungsform Hohlräume 18 aufweist. Die Hohlräume 18 sind jeweils vollständig vom Material des Gehäuses 1 umschlossen, was aufgrund der additiven Fertigung in der Herstellung einfach machbar ist. Die Hohlräume 18 erlauben Materialeinsparungen und ermöglichen dadurch ein kostengünstigeres sowie leichteres Gehäuse 1. Darüber hinaus können die Hohlräume aber auch dazu dienen, Lärmemissionen der Strömungsmaschine zu reduzieren. Vorteilhaft sind die Hohlräume hierzu teilweise oder ganz mit einem Pulver gefüllt, das vibrations- bzw. schallabsorbierend wirkt. Bevorzugt handelt es sich dabei um das Additiv-Pulver, welches beim additiven Herstellungsverfahren für das Gehäuse 1 sowieso verwendet wird. Anstatt, dass das Additiv-Pulver bei der Herstellung in den Bereichen der Hohlräume 18 aus diesen ausgeblasen wird, verbleibt es also bevorzugt darin. Auf diese Weise kann mit geringem Herstellungsaufwand eine besonders vibrationsarme und leise Strömungsmaschine erreicht werden.

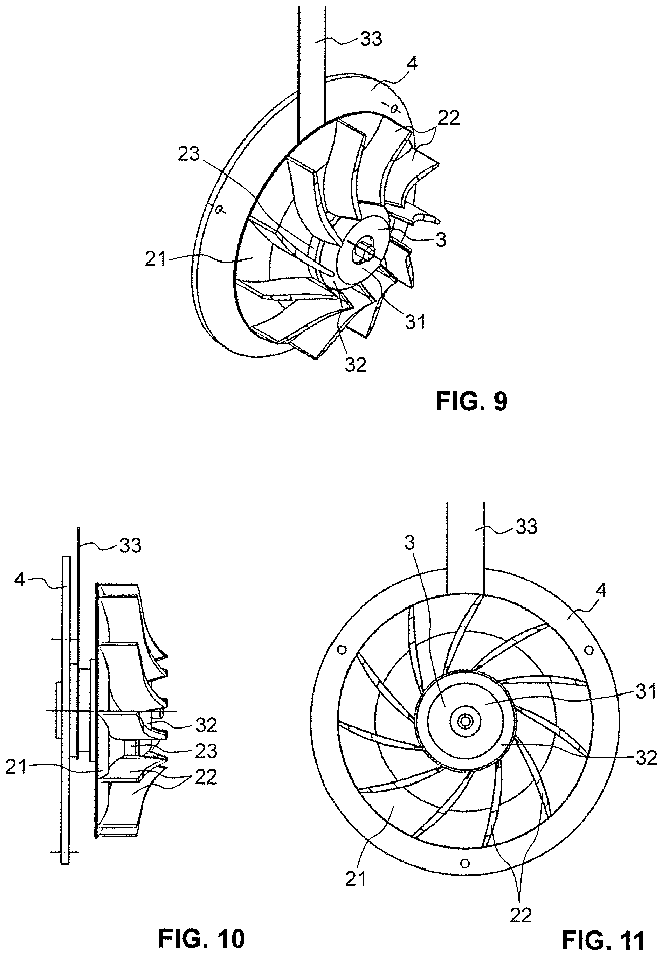

Das Laufrad 2 ist insbesondere in den Figuren 9 bis 11 gut zu erkennen. Es weist eine kreisrunde Grundplatte 21 auf, die eine zentrale Öffnung hat, in welcher der Antriebsmotor 3 angeordnet ist. Zur Mitte bzw. zur Öffnung hin ist die Grundplatte 21 leicht nach vorne gewölbt. Im Bereich der Öffnung kann die Grundplatte 22 eine Verdickung aufweisen, oder wie in den Figuren 9 und 10 erkennbar, in einen Haltering 23 übergehen, welcher die Verbindung zum Rotor 32 des Antriebsmotors 3 herstellt. Auf der Vorderseite der Grundplatte 21 sind in regelmässigen Abständen Schaufeln 22 angebracht, die sich jeweils vom Haltering 23 bis zum äusseren Rand der Grundplatte 21 erstrecken. Die Schaufeln 22 weisen entlang ihrer Erstreckung vom Innen- zum Aussenrand der Grundplatte 21 jeweils eine ungefähr gleichbleibende Höhe auf. Aufgrund der Wölbung der Grundplatte 21 erheben sich die Schaufeln 22 zur Mitte hin jeweils leicht nach vorne hin.

Die Schaufeln 22 sind rückwärts gekrümmt, das heisst, dass sie im Betrieb der Strömungsmaschine, das heisst wenn sich das Laufrad 2 dreht, von der Mitte der Grundplatte 21 nach aussen hin bzgl. der Drehrichtung jeweils nach hinten gekrümmt sind. In der Ansicht der Figur 11 dreht sich das Laufrad 2 bestimmungsgemäss somit im Gegenuhrzeigersinn. Durch die rückwärts gekrümmte Schaufeln 22 ist das Laufrad dazu ausgebildet, im Betrieb einen besonders hohen Druck zu erzeugen.

Mit einer Strömungsmaschine, welche gemäss dem vorliegenden Ausführungsbeispiel realisiert wurde, konnte ein Differenzdruck zwischen Einlassmündung 15 und Auslassmündung 16 von bis zu 17 mbar bei einem Wirkungsgrad von 40% erreicht werden.

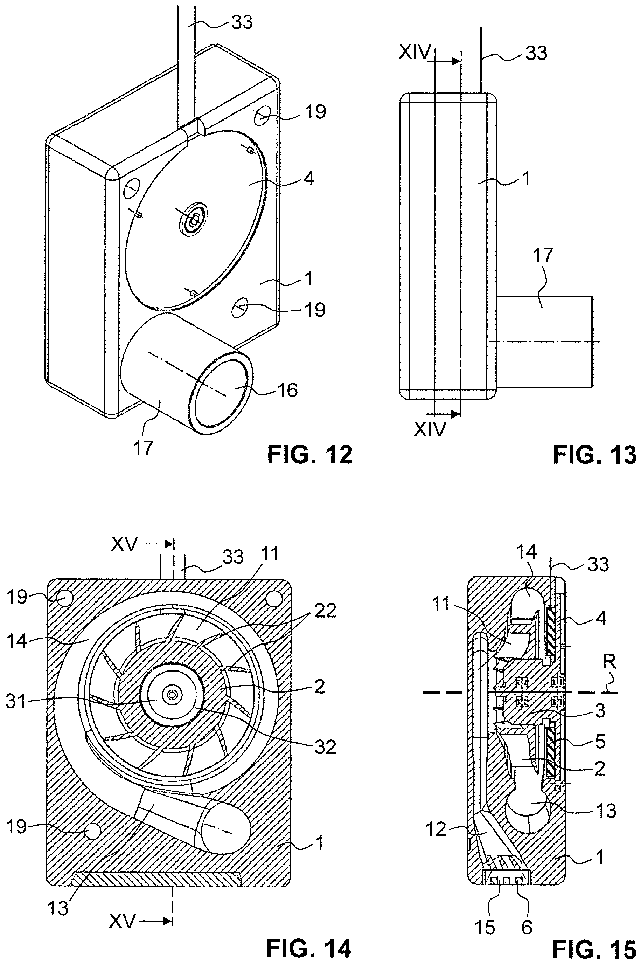

Eine zweite Ausführungsform einer erfindungsgemässen Strömungsmaschine ist in den Figuren 12 bis 15 gezeigt. Die Ausführungsform der Figuren 12 bis 15 unterscheidet sich dadurch von derjenigen der Figuren 1 bis 11, dass die Auslassmündung 16 hier nicht parallel zur Einlassmündung 15 angeordnet ist, sondern in die axiale Richtung gerichtet ist. Die Auslassmündung 16 wird von einem Auslassstutzen 17 umrandet, der sich parallel zur Rotationsachse R, aber beabstandet dazu, von der Rückseite des Gehäuses 1 weg erstreckt. Die Einlassmündung 15 und die Auslassmündung 16 weisen bei dieser Ausführungsform somit in zwei senkrecht aufeinander stehende Richtungen. Das Vorsehen des Anschlussstutzens 17 erleichtert die Kopplung von z.B. einem Beatmungsschlauch an der Auslassmündung 16.

Des Weiteren unterscheidet sich die vorliegende Ausführungsform dadurch von derjenigen der Figuren 1 bis 11, dass im Bereich der Einlassmündung ein HEPA-Filter 6 vorgesehen ist. Beim HEPA-Filter 6 handelt es sich um einen Partikelfilter, der das Eindringen von Partikeln wie Staub etc. in das Innere des Gehäuses 1 verhindert.

In der Figur 15 ist ausserdem erkennbar, dass im Innenraum 11 zusätzlich eine Elektronikeinheit 5 angeordnet ist. Die an der Deckplatte 4 angebrachte Elektronikeinheit 5 dient zur Ansteuerung und zur Kontrolle des Antriebsmotors 3. Die Elektronikeinheit 5 kann auch Sensoren beinhalten, zum Beispiel zum Messen der Drehgeschwindigkeit, der Temperatur und/oder von Vibrationen. Auch könnte die Elektronikeinheit 5 eine RFID oder eine Drahtlosverbindungseinheit, wie beispielsweise eine Bluetooth-Einheit, aufweisen, um z.B. eine Erkennung durch das Beatmungsgerät zu ermöglichen, damit zum Beispiel nur ein bestimmter Typ von Strömungsmaschinen angeschlossen werden kann. Optional könnte auch ein Energiespeicher, wie zum Beispiel eine oder mehrere Batterien, im Innenraum 11 angeordnet und an der Deckplatte 4 angebracht sein, um den Antriebsmotor 3 mit elektrischer Energie zu versorgen.

Wie in den Figuren 12 und 14 zu erkennen ist, weist das Gehäuse 1 hier mehrere von der Vorder- zur Rückseite durchgehende Bohrlöcher 19 auf, welche zur Befestigung der Strömungsmaschine zum Beispiel in einem Beatmungsgerät dienen. Um Vibrationen und Schallemissionen zu dämpfen, werden zur Befestigung bevorzugt Nägel oder Schrauben durch die Bohrlöcher 19 geführt, welche aus einem elastischen Gummimaterial hergestellt sind. Insbesondere elastische Nägel sind zur Verwendung im Bereich von Ventilatoren bekannt.

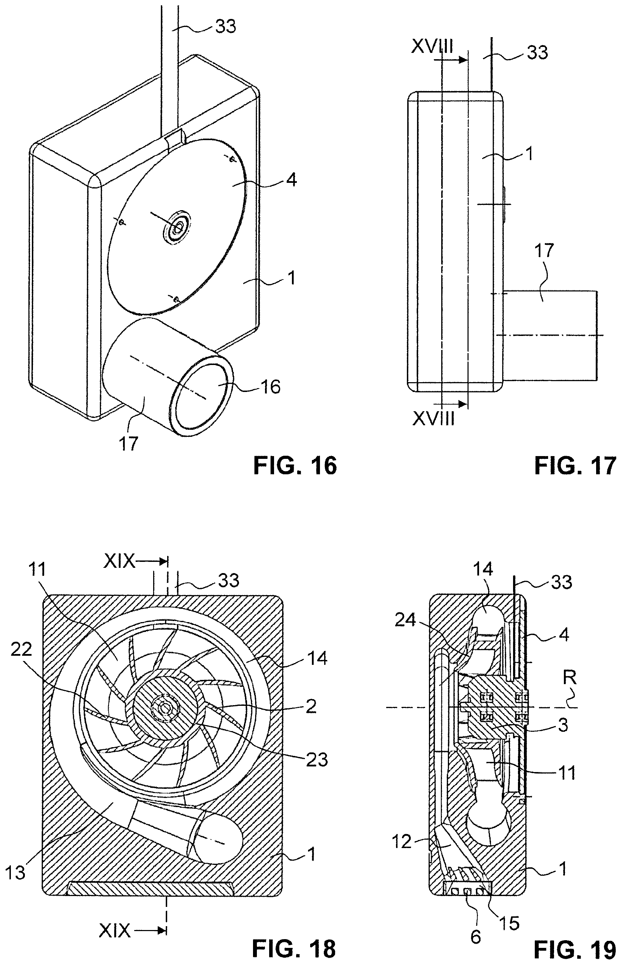

Die Figuren 16 bis 22 zeigen eine weitere Ausführungsform, welche im Wesentlichen derjenigen der Figuren 12 bis 15 entspricht, jedoch ein Laufrad 2 mit Deckscheibe 24 aufweist. Die an der Vorderseite des Laufrads 2 an den Schaufeln 22 angebrachte Deckscheibe 24 ist in den Figuren 19 bis 22 erkennbar. Aufgrund der Deckscheibe 24 sind die Strömungskanäle zwischen den Schaufeln 22 jeweils nicht nur nach hinten und seitlich, sondern auch nach vorne hin begrenzt, wodurch es im Betrieb zu weniger Verwirbelungen um Bereich des Laufrads kommt.

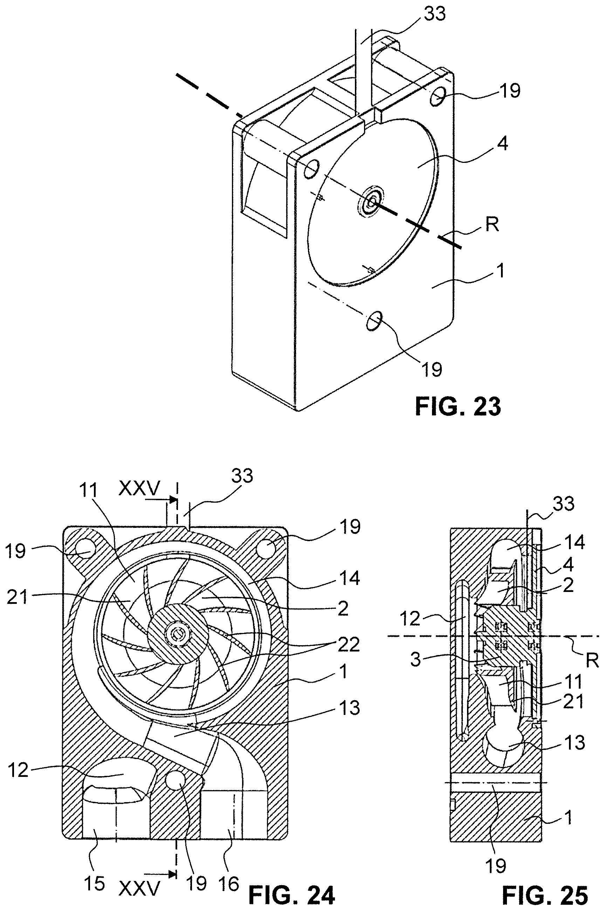

Eine weitere vierte Ausführungsform einer erfindungsgemässen Strömungsmaschine ist in den Figuren 23 bis 25 gezeigt. Diese Ausführungsform entspricht im Wesentlichen derjenigen der Figuren 1 bis 11, wobei hier jedoch keine Hohlräume 18, dafür aber Bohrlöcher 19 vorgesehen sind. Die Bohrlöcher 19 dienen zur Befestigung der Strömungsmaschine beispielsweise an einem Beatmungsgerät. Hierzu können Befestigungsmittel, wie beispielsweise Nägel oder Schrauben, die insbesondere aus einem elastischen Gummimaterial hergestellt sein können, durch die Bohrlöcher 19 hindurchgeführt werden. Anstelle der Hohlräume 18 sind bei der Ausführungsform der Figuren 23 bis 25 im Gegensatz zu derjenigen der Figuren 1 bis 11 in den oberen Eckbereichen um die Bohrlöcher 19 herum jeweils Materialreduktionen in Form von Aussparungen vorgesehen. Auf diese Weise kann der Materialverbrauch bei der Herstellung vermindert und das Gehäuse 1 leichter hergestellt werden.

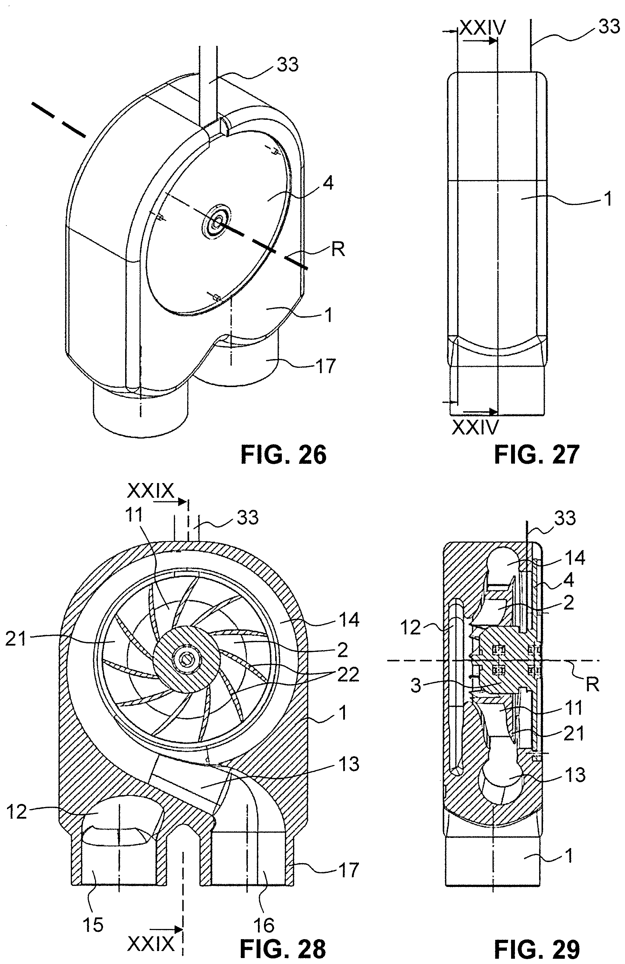

Die Figuren 26 bis 29 zeigen eine fünfte Ausführungsform einer erfindungsgemässen Strömungsmaschine, welche nachfolgend anhand der Unterschiede zur Ausführungsform der Figuren 1 bis 11 beschrieben wird. Das Gehäuse 1 ist hier mit weniger Material hergestellt und deshalb leichter als das Gehäuse der Ausführungsform der Figuren 1 bis 11. Dies wird erreicht, indem die oberen Eckbereiche dem Innenraum 11 entlang gerundet ausgebildet sind. Ausserdem sind die Einlassmündung 15 und die Auslassmündung 16 jeweils innerhalb eines Stutzens ausgebildet, wodurch der Materialverbrauch um jeweils die beiden Stutzen herum vermindert ist. Neben dem geringeren Materialverbrauch bringen die Stutzen aber auch den Vorteil mit sich, dass die Kopplung von Schläuchen erleichtert ist. So kann am Einlassstutzen zum Beispiel ein Frischluft-Zuführschlauch und am Auslassstutzen 17 ein Beatmungsschlauch angekoppelt werden. Aufgrund der additiven Fertigung ist die Form des Gehäuses 1 besonderes einfach anpassbar.

Selbstverständlich ist die hier beschriebene Erfindung nicht auf die erwähnten Ausführungsformen beschränkt und eine Vielzahl von Abwandlungen ist möglich. So wäre es zum Beispiel denkbar, den Antriebsmotor ausserhalb der Strömungsmaschine bzw. ausserhalb des Gehäuses anzuordnen. Die sich im Inneren des Gehäuses erstreckenden Strömungskanäle könnten auch anders verlaufen und/oder deren Anzahl könnte grösser sein. So wäre es zum Beispiel möglich, dass mehrere Einströmungskanäle und/oder mehrere Ausströmungskanäle vorhanden wären, um das Fluid anzusaugen bzw. aus dem Gehäuse hinaus zu befördern. Das Laufrad kann eine beliebige andere Ausgestaltung aufweisen, als sie in den vorstehenden Ausführungsformen vorgeschlagen ist. So könnten die Schaufeln beispielweise auch vorwärts oder gar nicht gekrümmt sein. Bei den in den Ausführungsbeispielen gezeigten Strömungsmaschinen handelt es sich jeweils um radiale Strömungsmaschine. Stattdessen könnte es sich bei der Strömungsmaschine aber auch um eine axiale Strömungsmaschine handeln, bei welcher das Fluid entlang der Rotationsachse ins Gehäuse und zum Laufrad strömt und das Gehäuse auf entlang der Rotationsachse wieder verlässt. Das Gehäuse und das Laufrad hätten in diesem Fall jeweils ganz andere Ausgestaltungen als in Bezug auf die vorstehenden Ausführungsbeispiele beschrieben. Weiters wäre es zum Beispiel denkbar, anstelle des Steuerungs- und Energieversorgungskabels 33 auf der Aussenseite des Gehäuses Anschlusspins vorzusehen, um die Übertragung von elektrischer Energie und/oder Signalen zu ermöglichen. Eine Vielzahl weiterer Abwandlungen ist denkbar.

**BEZUGSZEICHENLISTE**

| | | | |
|---|---|---|---|
| 1 | Gehäuse | 24 | Deckscheibe |
| 11 | Innenraum | | |
| 12 | Einströmungskanal | 3 | Antriebsmotor |
| 13 | Ausströmungskanal | 31 | Stator |
| 14 | Peripherer Strömungskanal | 32 | Rotor |
| 15 | Einlassmündung | 33 | Steuerungs- und Energieversorgungskabel |
| 16 | Auslassmündung | | |
| 17 | Auslassstutzen | | |
| 18 | Hohlraum | 4 | Deckplatte |
| 19 | Bohrung | 5 | Elektronikeinheit |
| 2 | Laufrad | | |
| 21 | Grundplatte | 6 | HEPA-Filter |
| 22 | Schaufel | | |
| 23 | Haltering | R | Rotationsachse |

## Patentansprüche

1. Strömungsmaschine, insbesondere Ventilator oder Verdichter, aufweisend
ein Gehäuse (1) mit zumindest einem Strömungskanal (12, 13, 14);
ein im Gehäuse (1) angeordnetes Laufrad (2); sowie
einen Antriebsmotor (3) zum Antreiben des Laufrads (2) in einer Drehbewegung um eine Rotationsachse (R), um ein Fluid, insbesondere ein Gas, durch den zumindest einen Strömungskanal (12, 13, 14) hindurch in das Gehäuse (1) hinein anzusaugen und/oder durch den zumindest einen Strömungskanal (12, 13, 14) hindurch aus dem Gehäuse (1) hinaus zu befördern;
**dadurch gekennzeichnet, dass**
das Gehäuse (1) mittels additiver Fertigung hergestellt ist.

2. Strömungsmaschine nach Anspruch 1, wobei das Gehäuse (1) als Ganzes einstückig hergestellt ist.

3. Strömungsmaschine nach Anspruch 1 oder 2, wobei das Laufrad (2) dazu ausgebildet ist, den Fluidstrom bzgl. der Rotationsachse (R) von einer axialen Richtung in eine radiale Richtung umzulenken.

4. Strömungsmaschine nach einem der vorhergehenden Ansprüche, wobei es sich beim Strömungskanal oder bei zumindest einem der Strömungskanäle um einen Ausströmungskanal (13) handelt, der sich bzgl. der Rotationsachse (R) in tangentialer und/oder radialer Richtung vom Laufrad (2) aus weg erstreckt und zum Befördern des Fluids aus dem Gehäuse (1) hinaus dient.

5. Strömungsmaschine nach einem der vorhergehenden Ansprüche, wobei der Ausströmungskanal (13) bzgl. der Rotationsachse (R) in tangentialer und/oder radialer Richtung vom Gehäuse (1) aus nach aussen mündet.

6. Strömungsmaschine nach einem der Ansprüche 1 bis 4, wobei der Ausströmungskanal (13) bzgl. der Rotationsachse (R) in axialer Richtung vom Gehäuse (1) aus nach aussen mündet.

7. Strömungsmaschine nach einem der vorhergehenden Ansprüche, wobei es sich beim Strömungskanal oder bei zumindest einem der Strömungskanäle um einen Einströmungskanal (12) handelt, der sich derart zum Laufrad (2) hin erstreckt, dass das durch den Einströmungskanal (12) angesaugte Fluid bzgl. der Rotationsachse (R) in axialer Richtung und zentral auf das Laufrad (2) auftrifft.

8. Strömungsmaschine nach einem der vorhergehenden Ansprüche, wobei der Einströmungskanal (12) bzgl. der Rotationsachse (R) in tangentialer und/oder radialer Richtung vom Gehäuse (1) aus nach aussen mündet.

9. Strömungsmaschine nach einem der vorhergehenden Ansprüche, wobei das Gehäuse (1), bevorzugt die Strömungsmaschine als Ganzes, eine quaderförmige Gestalt hat.

10. Strömungsmaschine nach einem der vorhergehenden Ansprüche, wobei es sich beim Antriebsmotor (3) um einen Aussenläufer-Motor mit einem Stator (31) und mit einem den Stator (31) umgebenden Rotor (32) handelt, und wobei das Laufrad (2) im Spritzgussverfahren hergestellt und direkt an den Rotor (32) angespritzt ist.

11. Strömungsmaschine nach einem der vorhergehenden Ansprüche, wobei das Gehäuse (1) einen Innenraum (11) zur Aufnahme des Antriebsmotors (3) und des Laufrads (2) aufweist, und wobei der Antriebsmotor (3) an einer Deckplatte (4) angebracht ist, welche zum Verschliessen des Innenraums (11) nach aussen hin dient.

12. Strömungsmaschine nach Anspruch 11, ausserdem aufweisend eine zur Steuerung des Antriebmotors (3) dienende Elektronikeinheit (5), welche im Innenraum (11) des Gehäuses (1) angeordnet und an der Deckplatte (4) angebracht ist.

13. Strömungsmaschine nach einem der vorhergehenden Ansprüche, wobei das Laufrad (2) rückwärtsgekrümmte Schaufeln (22) aufweist.

14. Strömungsmaschine nach einem der vorhergehenden Ansprüche, ausserdem aufweisend einen Partikelfilter, insbesondere einen HEPA-Filter (6), welcher im Bereich des Strömungskanals (12, 13, 14) oder von zumindest einem der Strömungskanäle (12, 13, 14) angeordnet ist.

15. Strömungsmaschine, insbesondere eine Strömungsmaschine nach einem der vorhergehenden Ansprüche, aufweisend
ein Laufrad (2); sowie
einen als Aussenläufer-Motor ausgebildeten Antriebsmotor (3) mit einem Stator (31) und mit einem den Stator (31) umgebenden Rotor (32) zum Antreiben des Laufrads (2) in einer Drehbewegung um eine Rotationsachse (R), um ein Fluid, insbesondere ein Gas, anzusaugen und zu befördern;
**dadurch gekennzeichnet, dass**
das Laufrad (2) im Spritzgussverfahren hergestellt und direkt an den Rotor (32) angespritzt ist.
